# EUROPÄISCHE PATENTANMELDUNG

(11) **EP 0 738 094 A2**
(43) Veröffentlichungstag der Anmeldung: **16.10.1996**
(21) Anmeldenummer: 96105211.5
(22) Anmeldetag: 01.04.1996
(51) Int. Cl.: H04Q 7/38, H04Q 7/30

(54) **Verfahren zur Steuerung von Funktion zum Funkbereichswechsel**

(30) Priorität: 12.04.1995 DE 19513959
(71) Anmelder: SIEMENS AKTIENGESELLSCHAFT, 80333 München (DE)
(72) Erfinder: Da Silva, Mauricio, Dipl.-Ing., 44227 Dormund (DE); Leimkötter, Ulrich, Dipl.-Ing., 45888 Gelsenkirchen (DE)

(57) **Zusammenfassung**

In einer Programmodulstruktur einer Teilnehmerbaugruppe (SLMC) von Drahtlos-Kommunikationssystemen werden den Programmodulen zur Bearbeitung des Funkbereichswechsel-Vorgangs (PMH) eine höhere Priorität als den Programmodulen zur Bearbeitung der Kommunikationsprotokolle (PMB) und den Programmodulen zur Vermittlung (PMV) zugeordnet und die Programmodule entsprechend ihrer Priorität abgearbeitet. Durch die bevorzugte Behandlung des Handover-Vorgangs werden die System-Ressourcen, insbesondere die Bearbeitungsressourcen, auf den Handover-Vorgang konzentriert. Im Rahmen der Gesamtbelastbarkeit der Teilnehmerbaugruppe des Drahtlos-Kommunikationssystems wird damit die Kommunikationsverbindung während eines Handover-Vorgangs mit hoher Sicherheit aufrechterhalten, indem eine schnelle Umschaltung auf den neuen Kommunikationsweg erfolgt, wobei durch das schnelle Umschalten auch Störungen vermieden werden.

## Beschreibung

Drahtlos-Kommunikationssysteme dienen dem Auf- und Abbau von drahtlosen Kommunikationsverbindungen sowie der Unterstützung weiterer Leistungsmerkmale während der Kommunikationsverbindungen zu und von Teilnehmern im Funkbereich von Basisstationen des jeweiligen Drahtlos-Kommunikationssystems. Ein Drahtlos-Kommunikationssystem weist dabei eine, in der Regel mit anderen Kommunikationsanlagen vernetzte, zentrale Kommunikationsanlage mit einer zentralen Vermittlungssteuerung und mit zumindest einer in der zentralen Kommunikationsanlage angeordneten und mit der zentralen Vermittlungssteuerung verbundenen Teilnehmerbaugruppe und desweiteren jeweils zumindest eine mit einer Teilnehmerbaugruppe verbundenen Basisstation, sowie Kommunikationsendgeräte auf. Der Anschluß von Kommunikationsendgeräten an Basisstationen erfolgt jeweils über eine drahtlose Kommunikationsverbindung. Ein derartiges Drahtlos-Kommunikationssystem ist zum Beispiel aus der veröffentlichten Patentanmeldung DE 43 09 848.7 bekannt.

Desweiteren ist es aus der EP 0 519 106 A1 eine Programmodulstruktur für programmgesteuerte Kommunikationsanlagen im Zusammenhang mit dem drahtgebundenen Anschluß von Kommunikationsendgeräten bekannt, bei der den Programmodulen Prioritäten zugeordnet werden und die Programmodule entsprechend ihrer Priorität abgearbeitet werden. Den Programmodulen zur Erkennung und Sicherung der Signalisierungsinformation und der Verwaltung des Kommunikationsaustausches auf der Busstruktur wird die höchste Priorität zuerkannt. Der zeitlichen Steuerung von Signalisierungstönen wird die zweithöchste Priorität zugewiesen, währenddessen die Prozesse zur Anreizsicherung und -ausgabe die dritthöchste Priorität aufweisen. Prozessen mit Vermittlungsaufgaben wird die vierthöchste Priorität zugeordnet und dem Zeitmanagement der verschiedenen Prozesse und der gleichmäßigen auf die aktiven Benutzer verteilten Weitergabe der gesicherten Anreize wird die fünfthöchste Priorität zugewiesen. Verwaltungs- und Testaufgaben haben demgegenüber die niedrigste Priorität.

Diese Programmodulstruktur legt die Wertigkeiten der verschiedenen Prozesse für ein Kommunikationssystem mit dem ausschließlich drahtgebundenen Anschluß von Kommunikationsendgeräten fest. Die Entwicklung von Drahtlos-Kommunikationssystemen, z.B. nach dem DECT-Standard (Digital European Cordless Telecommunications), fügt dem aus EP 0 519 106 A1 bekannten Leistungsmerkmalen unter anderem ein Leistungsmerkmal hinzu, entsprechend dem während einer Kommunikationsverbindung der Funkbereich gewechselt werden kann (Handover), also ein neuer Verbindungsweg aufgebaut wird.

Der Funkbereichswechsel ermöglicht es einem Kommunikationsendgerät bei bestehender Kommunikationsverbindung einen parallelen Kommunikationsweg zu einer weiteren Basisstation aufzubauen und wenn dieser Kommunikationsweg bessere funktechnische Eigenschaften aufweist, auf den neuen Kommunikationsweg umzuschalten. Damit können Verschlechterungen der Übertragungsqualität auf dem ursprünglichen Kommunikationsweg umgangen werden und eine ständig hohe Güte der Kommunikationsverbindung erreicht werden. Auf dem ursprünglichen Kommunikationsweg treten in der Regel Störungen - die Störungen können bis zu einer Unterbrechung der Kommunikationsverbindung führen - auf, die bevor sie dem Teilnehmer wahrnehmbar werden, vermieden werden sollen.

Diesem neuen Merkmal des Funkbereichswechsels kann durch eine Bearbeitung des Handover-Vorgangs im Rahmen der vorhergend erläuterten Prozesse zur Vermittlung nicht entsprochen werden. Insoweit ist die aus EP 0 519 106 A1 bekannte Lösung der Prioritätenstruktur nicht ausreichend und der Handover-Vorgang ist in die übrigen Prozessen zu integrieren. Beim Handover-Vorgang sollen Störungen der Gesprächsverbindung im Verlauf des Funkbereichswechsels und Verzögerungen der Signalisierung vom Teilnehmer - d.h. dem Nutzer des Kommunikationsendgerätes KE in Drahtlos-Kommunikationssystemen - nicht wahrnehmbar sein. Dabei soll es zusätzlich möglich sein, die Ruf- und Tonsignalisierung an die Kommunikationsendgeräten in die prioritätsorientierte Programmstruktur einzubeziehen.

Der Erfindung liegt die Aufgabe zugrunde, ein Verfahren zur Steuerung des Funkbereichwechsels von an eine Teilnehmerbaugruppe über Basisstationen angeschlossenen Kommunikationsendgeräten eines drahtlosen Kommunikationssystems anzugeben, bei dem die Kommunikationsverbindung während des Wechsels des Funkbereiches mit hoher Sicherheit aufrechterhalten wird. Die Aufgabe wird von einem Verfahren nach den Merkmalen des Patentanspruchs 1 gelöst.

Durch die bevorzugte Behandlung des Handover-Vorgangs mittels der Vergabe einer hohen Priorität an diesen Vorgang im Vergleich zu anderen Protokollbearbeitungs- und Vermittlungsfunktionen werden die System-Ressourcen, insbesondere die Bearbeitungsressourcen, auf den Handover-Vorgang konzentriert. Im Rahmen der Gesamtbelastbarkeit der Teilnehmerbaugruppe des Drahtlos-Kommunikationssystems wird damit die Kommunikationsverbindung während eines Handover-Vorgangs mit hoher Sicherheit aufrechterhalten, indem eine schnelle Umschaltung auf den neuen Kommunikationsweg erfolgt, wobei durch das schnelle Umschalten auch Störungen vermieden werden.

Durch das erfindungsgemäße Verfahren entsteht eine für den Teilnehmer akzeptable bzw. einsichtige Systemoberfläche des Drahtlos-Kommunikationssystems. Für den Teilnehmer wahrnehmbare und als wichtig empfundene Leistungsmerkmale, wie z.B. die Qualität der Kommunikationsverbindung während der Bewegung des Teilnehmers - also auch während eines Funkbereichswechsels - und die Ruf- und Tonsignalisierung sollen für den Teilnehmer mit hoher Sicherheit und ohne unverständliche Verzögerungen gewährleistet werden. Auch die Dauer eines Verbindungsaufbaus ist für den Teilnehmer wahrnehmbar, doch sind hierbei kleinere Verzögerungen für ihn einsichtig.

Die Systemoberfläche, d.h. die Bedienoberfläche der Funktionen des Kommunikationsendgerätes, ist für den Teilnehmer akzeptable bzw. einsichtig, da die wahrnehmbaren Leistungsmerkmale:
die Bearbeitung des Handover-Vorgangs - Anspruch 1 -,
die Signalisierungserzeugung von Ton-, Rufsignalen, wenn diese vom Kommunikationsendgerät nicht selbst erzeugt werden können - Anspruch 2 - ,
bzw. die Sicherung der Kommunikation und des Handover-Vorgangs gegenüber der Signalisierungserzeugung, wenn die Signalisierungserzeugung im Kommunikationsendgerät durchführbar ist - Anspruch 3 -
und schließlich die Bearbeitung der Kommunikationsprotokolle und die Anreizerkennung und -zuordnung gegenüber der Vermittlung - Anspruch 4 -
höher priorisiert werden. Entsprechend der Leistungsfähigkeit der mit der Teilnehmerbaugruppe verbundenen Kommunikationsendgeräte, dort sind unter teilweiser Einsparung von Ton- und Rufsignaliserungserzeugung kostengünstigere Realisierungen möglich, ist damit eine Anpassung der Priorisierung der Programmodulstruktur möglich.

Im Sinne einer Gleichbehandlung aller Teilnehmer des Drahtlos-Kommunikationssystemes wird für die Abarbeitung der Anreize und Programmodule jedes Kommunikationsendgerätes ein gleicher Anteil an den System-Ressourcen zur Verfügung gestellt - Anspruch 5. Damit wird die Umsetzung von einem Echtzeitsystem - die Anreize werden unter Echtzeitbedingungen von den Kommunikationsendgeräten übermittelt - in ein System basierend auf einer Aufteilung der Prozessorressourcen (Time-sharing) gewährleistet. Die Einteilung der Programmodule gemäß ihrer Priorisierung erfolgt also nicht für alle Kommunikationsendgeräte gemeinsam, sondern wird für jedes Kommunikationsendgerät getrennt vorgenommen. Den aktiven, d.h. System-Ressourcen nachfragenden, Kommunikationsendgeräten wird unabhängig von den jeweils vorliegenden Prioritäten der jeweiligen Programmodule ein gleicher Anteil an den System-Ressourcen zugeteilt.

Eine weitere vorteilhafte Ausgestaltung des erfindungsgemäßen Verfahrens sieht vor, daß ein Kommunikationsendgerät, das eine Systemüberbelastung hervorruft, anhand der nachgefragten System-Ressourcen, insbesondere Bearbeitungsressourcen, detektiert und gesondert behandelt werden kann - Anspruch 6. Bewußt oder unbewußt durch Kommunikationsendgeräte hervorgerufene Belastungen des Kommunikationssystems sind somit dem verursachenden Kommunikationsendgerät zuordenbar. Wird eine solche Überbelastung des Kommunikationssystems in einem Zustand hoher Gesamtbelastung des Kommunikationssystems festgestellt, kann der Gesamtausfall oder die Benachteiligung anderer angeschlossener Kommunikationsendgeräte vermieden werden, indem dieses belastungsintensive Kommunikationsendgerät gesondert behandelt wird. Die gesonderte Behandlung des eine Systemüberbelastung hervorrufenden Kommunikationsendgerätes besteht in einem zeitweiligen Vorenthalten von System-Ressourcen, wodurch eine Entlastung der Teilnehmerbaugruppe erreicht wird - Anspruch 7.

Die Ansprüche 8 bis 10 geben eine Anordnung zur Durchführung des erfindungsgemäßen Verfahrens an.

Im folgenden wird das erfindungsgemäße Verfahren anhand dreier Blockschaltbilder näher erläutert. Dabei zeigen
- Fig 1: eine schematische Darstellung eines Drahtlos-Kommunikationssystems mit angedeuteten Funkbereichen,
- Fig 2: eine schematische Blockdarstellung zur Veranschaulichung der Prioritätsstruktur der Programmodule und
- Fig 3: ein Anlaufdiagramm zur Veranschaulichung der wesentlichen programmtechnischen Schritte bei der Abarbeitung der Programmodule mit den Prioritäten 2b bis 4.

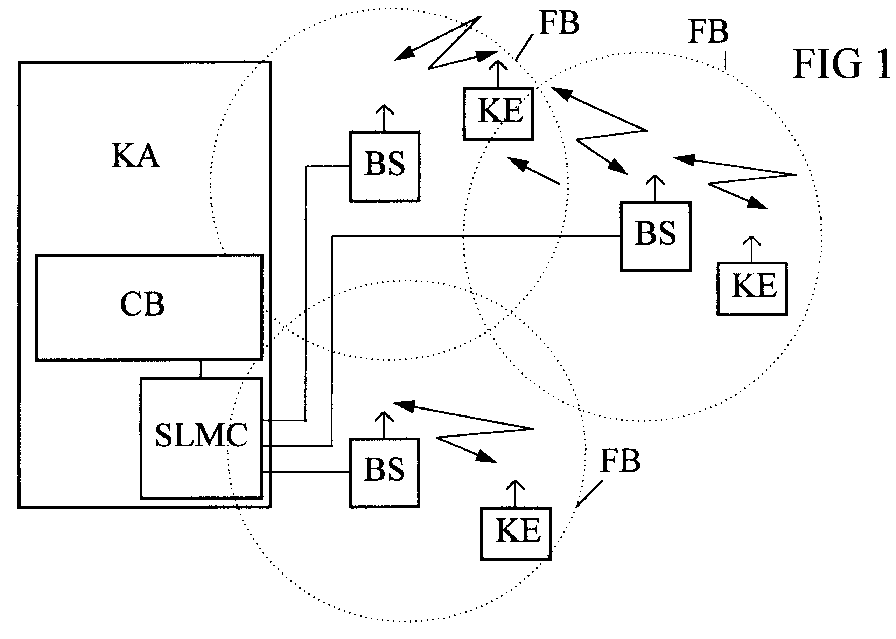

In Fig 1 ist eine eine zentrale Vermittlungssteuerung CB und eine Teilnehmerbaugruppe SLMC aufweisende Kommunikationsanlage KA dargestellt. Die Kommunikationsanlage KA ist über die Teilnehmerbaugruppe SLMC mit Basisstationen BS verbunden. Jede dieser Basisstationen BS kann hochfrequente Signale senden und empfangen. Die Trägerfrequenzen dieser hochfrequenten Signale betragen z.B. für Kommunikationssysteme nach dem DECT-Standard ca. 1,8 GHz. Entsprechend den örtlichen Gegebenheiten sind die von einer Basisstation BS gesendeten hochfrequenten Signale nur in einer bestimmten Entfernung von der Basisstation BS zu empfangen. Gleiches gilt für das Empfangen von hochfrequenten Signalen durch die Basisstation BS. Die Basisstation BS baut eine drahtlose Kommunikationsverbindung mit zumindest einem Kommunikationsendgerät KE auf, wenn sich dieses Kommunikationsendgerät KE im Funkbereich der Basisstation BS befindet und seitens des Kommunikationsendgerätes KE oder eines anderen Teilnehmers die Aufforderung zum Gesprächsaufbau vorliegt. Auch die vom Kommunikationsendgerät KE gesendeten hochfrequenten Signale können durch die Basisstation BS nur dann empfangen werden, wenn sich das Kommunikationsendgerät KE in einem bestimmten Bereich um die Basisstation BS befindet. Dieser Bereich um eine Basisstation BS gibt den Funkbereich FB dieser Basisstation BS an. Die Grenzen eines Funkbereiches FB, in Fig 1 als Kreisradien vereinfacht dargestellt, sind in der Regel unregelmäßig. Auch überlappen sich die Funkbereiche FB verschiedener Basisstationen BS. Zum weiteren muß beachtet werden, daß die Grenzen eines Funkbereiches FB nicht zeitlich stabil sind, sondern sich unter dem Einfluß von Störungen und Änderungen der Ausbreitungsbedingungen verändern.

In Drahtlos-Kommunikationssystemen soll es dem Teilnehmer, also dem Benutzer eines Kommunikationsendgerätes KE, möglich sein, sich auch während einer Kommunikationsverbindung frei zu bewegen. Dies schließt auch den Fall ein, daß ein Kommunikationsendgerät KE den Funkbereich FB einer Basisstation BS verläßt und in den Funkbereich FB einer anderen Basisstation BS eintritt. Die Kommunikationsanlage KA muß dabei einen neuen Kommunikationsweg für das Kommunikationendgerät KE schaffen. Dieser Vorgang ist als Funkbereichswechsel (Handover) bekannt und erfordert eine Bearbeitung durch die Kommunikationsanlage KA. Die Bearbeitung eines Funkbereichswechsels zwischen den Funkbereichen FB von Basisstationen BS, die an eine Teilnehmerbaugruppe SLMC angeschlossen sind, erfolgt in dieser Teilnehmerbaugruppe SLMC.

Die Qualität der drahtlosen Kommunikation zwischen Basisstation BS und Kommunikationsendgerät KE wird ständig überprüft. Genügt die Qualität dieses Kommunikationsweges nicht mehr den Anforderungen, dann bemüht sich das Kommunikationsendgerät KE um eine Verbindung mit einer anderen Basisstation BS. Bei einer Kommunikationsverbindung muß zwischen der Signalisierungsinformation, die den Auf- und Abbau einer Kommunikationsverbindung und der Unterstützung weiterer Leistungsmerkmale bewirkt, und der Nutzinformation, z.B. Sprachinformation, unterschieden werden.

Das Kommunikationsendgerät KE baut also zuerst einen zweiten Kommunikationsweg auf, über den nur Signalisierungsinformationen ausgetauscht werden. Die Basisstation BS des neuen Kommunikationsweges signalisiert dann der Teilnehmerbaugruppe SLMC diesen neuen Kommunikationsweg und der Aufbau der Kommunikationsverbindung über die neue Basisstation BS wird vorbereitet. Neben der weiterhin fortlaufenden Übertragung der Nutzinformationen über die ursprüngliche Basisstation BS zu und von Kommunikationsendgeräten KE wird zuerst eine Verbindung für die Nutzinformationen zwischen der Teilnehmerbaugruppe SLMC und der neuen Basisstation BS für die zum Kommunikationsendgerät KE zu übertragenden Nutzinformationen und eine drahtlose Verbindung zwischen Kommunikationsendgerät KE und der neuen Basisstation BS für die vom Kommunikationsendgerät KE gesendeten Nutzinformationen hergestellt. Dann vermittelt die neue Basisstation BS die Verbindung für die Nutzinformationen in beide Richtungen, von der Teilnehmerbaugruppe SLMC zum Kommunikationsendgerät KE und vom Kommunikationsendgerät KE zur Teilnehmerbaugruppe SLMC. Schließlich wird der neue Kommunikationsweg für die Nutzinformation vollständig freigegeben und der ursprüngliche Kommunikationsweg aufgelöst, indem in der Teilnehmerbaugruppe SLMC für die vom Kommunikationsendgerät KE eintreffenden Nutzinformationen der neue Kommunikationsweg durchgeschaltet und der ursprüngliche Kommunikationsweg getrennt wird, und als zweiter Schritt im Kommunikationsendgerät KE die eintreffenden Nutzinformationen dem neuen Kommunikationsweg entnommen werden und gleichzeitig der ursprüngliche Kommunikationsweg aufgegeben wird. Abschließend wird auch die ursprüngliche Basisstation BS die Unterhaltung des ursprünglichen Kommunikationsweges aufgeben.

Während dieses Funkbereichswechsels können natürlich Störungen die drahtlose Kommunikationsverbindung beeinträchtigen. Auch kann bei einem extrem schnellen Bewegen des Kommunikationsendgerätes KE von einem Funkbereich FB in einen anderen Funkbereich FB die Kommunikationsverbindung über den ursprünglichen Kommunikationsweg stark gestört und ggf. unterbrochen werden, noch bevor der neue Kommunikationsweg aufgebaut worden ist. Dem beugt das erfindungsgemäße Verfahren durch die bevorzugte Bearbeitung des Handover-Vorgangs vor.

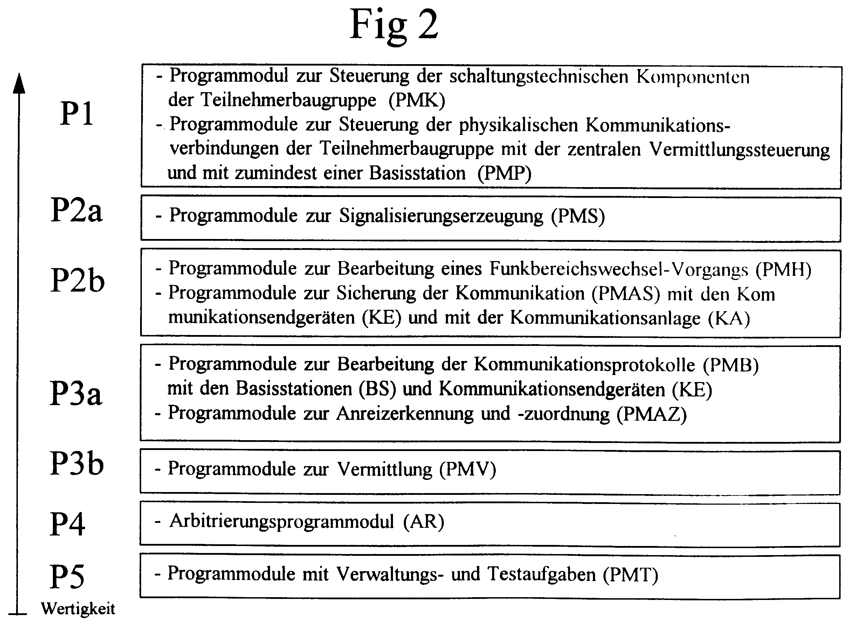

In Fig 2 ist das Ergebnis des ersten erfindungsgemäßen Verfahrensschrittes, die Zuordnung der Prioritäten zu den vielfältigen Funktionen, die in der Teilnehmerbaugruppe SLMC gesteuert werden müssen, dargestellt. Durch diese Priorisierung wird eine schnelle Bearbeitung des Handover-Vorganges erreicht, und damit mögliche Störungen gering gehalten. Die Funktionen der Teilnehmerbaugruppe SLMC werden dabei durch Programmodule realisiert.

Die höchste Priorität erhalten Programmodule zur Steuerung der schaltungstechnischen Komponenten PMK der Teilnehmerbaugruppe SLMC und Programmodule zur Steuerung der physikalischen Kommunikationsverbindung PMP der Teilnehmerbaugruppe SLMC mit der zentralen Vermittlungssteuerung CB und mit der zumindest einen Basisstation BS. Die Steuerung der Schaltungstechnik der Teilnehmerbaugruppe SLMC bildet die Basis für alle weiteren Funktionen. Die Steuerung der physikalischen Kommunikationsverbindungen entspricht der OSI-Schicht 1, also der Bitübertragungsschicht. Hier findet eine Verwaltung des physikalischen Mediums statt.

Die Priorität 2A wird den Programmodulen zur Signalisierungserzeugung PMS zugewiesen. Hierbei sind Signale zur Ton- und Rufsignalisierung gemeint, d.h. Signale, die vom Nutzer eines Kommunikationsendgerätes KE - dem Teilnehmer - wahrgenommen werden können, also zur Systemoberfläche gehören. In kostengünstigen Varianten der Kommunikationsendgeräte KE können diese Signale nicht erzeugt werden, die Teilnehmerbaugruppe SLMC unterstützt deshalb diese Signalisierungserzeugung mit hoher Priorität.

Eine nächstniedrigere Priorität, die Priorität 2B erhalten Programmodule zur Bearbeitung eines Funkbereichswechselvorgangs PMH eines an eine Basisstation BS drahtlos angeschlossenen Kommunikationsendgerätes KE, und Programmodule zur Sicherung der Kommunikation PMAS mit den Kommunikationsendgeräten KE und mit der Kommunikationsanlage KA. Die Programmodule zur Sicherung der Kommunikation PMAS realisieren Funktionen, die der OSI-Schicht 2 - der Sicherungsschicht - zugeordnet werden können. Hier wird der Kommunikationsprozeß bezüglich Übertragungsfehler überwacht. Der Funkbereichswechselvorgang, der seiner Funktion nach der OSI-Schicht 3 - der Vermittlungsschicht - zuzuordnen wäre, wird mit der gleichen Wertigkeit wie die Programmodule zur Sicherung der Kommunikation PMAS bearbeitet. Der Funkbereichswechselvorgang erfährt also eine deutliche Aufwertung und eine bevorzugte Behandlung bezüglich der System-Ressourcen der Teilnehmerbaugruppe SLMC.

Den Funktionen der Vermittlungsschicht (OSI-Schicht 3), d.h. den Programmodulen zur Bearbeitung der Kommunikationsprotokolle PMB mit den Basisstationen BS und Kommunikationsendgeräten KE und den Programmodulen zur Anreizerkennung und - zuordnung PMAZ der von den Kommunikationsendgeräten KE übermittelten Anreize wird die Priorität 3A zugewiesen. Weniger zeitkritisch sind die Vermittlungsfunktionen, deshalb kann den Programmodulen zur Vermittlung PMV die Priorität 3B zugewiesen werden.

Ein Arbitrierungsprogrammodul AR, das nacheinander die den aktiven Kommunikationsendgeräten KE individuell zugeordneten Anreizspeicher absucht und jedes Mal beim Auffinden eines wenigstens einen Anreiz enthaltenden Anreizspeichers aus diesem einen Anreiz entnimmt und anschließend das den dem entnommenen Anreiz entsprechenden Programmodul zur Ausführung bringt, wird die Priorität 4 zugeordnet. Zeitunkritischen Verwaltungs- und Testfunktionen sind nur System-Ressourcen zur Verfügung zu stellen, wenn eine geringe Gesamtbelastung des Systems vorliegt. Programmodule mit Verwaltungs- und Testaufgaben PMT erhalten deshalb die niedrigste Priorität, die Priorität 5.

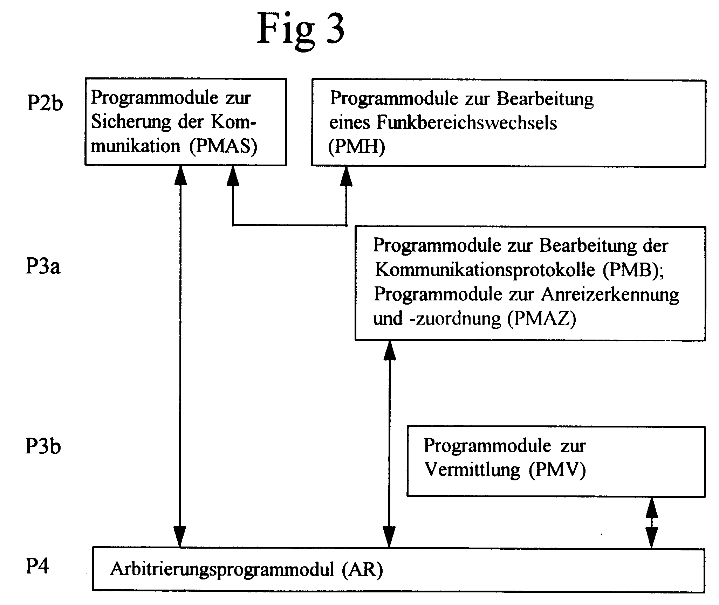

In Fig 3 sind die wesentlichen programmtechnischen Schritte bei der Bearbeitung der Anreize dargestellt. Eintreffende Anreize werden mit der Priorität 2B durch die Programmodule zur Sicherung der Kommunikation PMAS aufgenommen und gesichert. Bei Eintreffen eines solchen Anreizes wird ein Arbitrierungsprogrammodul AR angestoßen, das zur Abarbeitung kommt, wenn keine höher priorisierten Funktionen diese Abarbeitung unterbrechen. Der Aufruf von hochprioren Programmodulen hat Vorrang vor dem Aufruf von niederprioren Programmodulen durch das Arbitrierungsprogrammodul AR. Jedem angeschlossenen Kommunikationsendgerät KE wird ein gleicher Teil an System-Ressourcen zugeteilt, d.h. für jedes Kommunikationsendgerät KE existiert eine Warteschlangenliste (Prozeßliste), in die in bekannter Weise die zur Abarbeitung vorgesehenen Programmodule eingetragen sind. In dieser Warteschlangenliste ermittelt das Arbitrierungsprogrammodul AR dasjenige Programmodul mit der höchsten Priorität und bringt es zur Ausführung. Die Programmodule zur Bearbeitung eines Funkbereichswechsel-Vorgangs PMH haben die gleiche Priorität wie die Programmodule zur Sicherung der Kommunikation PMAS und werden ohne ein Hinzuziehen des Arbitrierungsprogrammoduls AR direkt bearbeitet. Entsprechend dieser Arbeitsweise werden Programmodule zur Bearbeitung eines Funkbereichswechsel-Vorgangs PMH schneller bearbeitet als die Programmodule zur Bearbeitung der Kommunikationsprotokolle PMB und die Programmodule zur Anreizerkennung und -zuordnung PMAZ und diese wiederum bevorzugt abgearbeitet gegenüber den Programmodulen zur Vermittlung PMV. Während der Ausführung eines der genannten Programmodule bleibt die Abarbeitung des Arbitrierungsprogrammoduls AR unterbrochen und wird danach wieder aufgenommen.

Durch die Zuteilung von gleichen System-Ressourcen zu den einzelnen aktiven Kommunikationsendgeräten KE - ein aktives Kommunikationsendgerät KE ist ein Kommunikationsendgerät KE, für das eine Kommunikationsverbindung auf- oder abgebaut bzw. unterhalten wird - ermöglicht es, die Kommunikationsendgeräte KE zu ermitteln, die besonders stark die System-Ressourcen nachfragen - z.B. durch ständige Fehlbedienung oder Defekte. Stellt die Nachfrage von System-Ressourcen durch ein solches Kommunikationsendgerät KE eine Überbelastung des Systems dar, können diesem Kommunikationsendgerät KE System-Ressourcen vorenthalten werden. Dies kann bedeuten, daß für dieses Kommunikationsendgerät KE kein Verbindungsaufbau zustandekommt, verschiedene Leistungsmerkmale nicht zur Verfügung stehen oder eine bestehende Verbindung abgebrochen wird.

## Patentansprüche

1. Verfahren zur Steuerung von Funktionen zum Funkbereichwechsel von Kommunikationsendgeräten (KE) in einer Programmodulstruktur einer Teilnehmerbaugruppe (SLMC) von Drahtlos-Kommunikationssystemen, wobei die Teilnehmerbaugruppe (SLMC) teilnehmerseitig mit zumindest einer Basisstation (BS) zum drahtlosen Anschluß mindestens eines Kommunikationsendgerätes (KE) und vermittlungsseitig mit einer zentralen Kommunikationsanlage (KA) zur Herstellung des Zugangs zu einem Kommunikationsnetz verbunden ist,
bei dem
- den Programmodulen zur Steuerung der schaltungstechnischen Komponenten (PMK) der Teilnehmerbaugruppe (SMLC) und den Programmodulen zur Steuerung der physikalischen Kommunikationsverbindungen (PMP) der Teilnehmerbaugruppe (SLM) mit der zentralen Vermittlungssteuerung (CB) und mit der zumindest einen Basisstation (BS) die höchste Priorität (P1) zugeordnet ist,
- den Programmodulen zur Signalisierungserzeugung von Ton- und Rufsignalen (PMS), den Programmodulen zur Bearbeitung eines Funkbereichwechsel-Vorgangs (PMH) eines an eine Basisstation (BS) drahtlos angeschlossenen Kommunikationsendgerätes (KE), den Programmodulen zur Sicherung der Kommunikation (PMAS) mit den Kommunikationsendgeräten (KE) und mit der Kommunikationsanlage (KA) die zweithöchste Priorität (P2) zugeordnet ist,
- den Programmodulen zur Bearbeitung der Kommunikationsprotokolle (PMB) mit den Basisstationen (BS) und den Kommunikationsendgeräten (KE), den Programmodulen zur Anreizerkennung und -zuordnung (PMAZ) der von den Kommunikationsendgeräten (KE) übermittelten Anreize und den Programmodulen zur Vermittlung (PMV) die dritthöchste Priorität (P3) zugeordnet ist,
- dem Arbitrierungsprogrammodul (AR) zum Auslesen gesicherter und zugeordneter Anreize und zum Aufrufen des durch einen aufgefunden Anreizes bezeichneten Programmodul die vierthöchste Priorität (P4) zugeordnet ist und
- den Programmodulen mit Verwaltungs- und Testaufgaben (PMT) die niedrigste Priorität (P5) zugeordnet ist,
und die Programmodule entsprechend ihrer Priorität abgearbeitet werden.

2. Verfahren nach Anspruch 1,
**gekennzeichnet durch**
eine Abstufung innerhalb der Programmodule mit der zweithöchsten Priorität (P2) derart, daß
- die Priorität (P2a) der Programmodule zur Signalisierungserzeugung von Ton- und Rufsignalen (PMS)
höher ist als
- die Priorität (P2b) der Programmodule zur Bearbeitung eines Funkbereichwechsel-Vorgangs (PMH) eines an eine Basisstation (BS) drahtlos angeschlossenen Kommunikationsendgerätes (KE) und der Programmodule zur Sicherung (PMAS) der Kommunikation mit den Kommunikationsendgeräten (KE) und mit der Kommunikationsanlage (KA).

3. Verfahren nach Anspruch 1,
**gekennzeichnet durch**
eine Abstufung innerhalb der Programmodule mit der zweithöchsten Priorität (P2) derart, daß
- die Priorität (P2b) der Programmodule zur Bearbeitung eines Funkbereichwechsel-Vorgangs (PMH) eines an eine Basisstation (BS) drahtlos angeschlossenen Kommunikationsendgerät (KE) und der Programmodule zur Sicherung (PMAS) der Kommunikation mit den Kommunikationsendgeräten (KE) und mit der Kommunikationsanlage (KA)
höher ist als
- die Priorität (P2a) der Programmodule zur Signalisierungserzeugung von Ton- und Rufsignalen (PMS).

4. Verfahren nach einem der Ansprüche 1 bis 3,
**gekennzeichnet durch**
eine Abstufung innerhalb der Programmodule mit der dritthöchsten Priorität (P3) derart, daß
- die Priorität (P3a) der Programmodule zur Bearbeitung der Kommunikationsprotokolle (PMB) mit den Basisstationen (BS) und den Kommunikationsendgeräten (KE) und der Programmodule zur Anreizerkennung und -zuordnung (PMAZ) der von den Kommunikationsendgeräten (KE) übermittelten Anreize
höher ist als
- die Priorität (P3b) der Programmodule zur Vermittlung (PMV).

5. Verfahren nach einem der vorhergehenden Ansprüche,
**dadurch gekennzeichnet,**
daß für die Abarbeitung der Anreize und Programmodule jedes Kommunikationsendgerätes (KE) ein gleicher Anteil an den System-Ressourcen zur Verfügung gestellt wird.

6. Verfahren nach einem der vorhergehenden Ansprüche,
**dadurch gekennzeichnet,**
daß ein Kommunikationsendgerät (KE), das eine Systemüberbelastung hervorruft, anhand der nachgefragten System-Ressourcen detektiert und gesondert behandelt werden kann.

7. Verfahren nach Anspruch 6,
**dadurch gekennzeichnet,**
daß die gesonderte Behandlung des eine Systemüberbelastung hervorrufenden Kommunikationsendgerätes (KE) in einem zeitweiligen Vorenthalten von System-Ressourcen besteht, wodurch eine Entlastung der Teilnehmerbaugruppe (SLMC) erreicht wird.

8. Anordnung zur Steuerung von Funktionen zum Funkbereichswechsel von Kommunikationsendgeräten (KE) in einer Programmodulstruktur einer Teilnehmerbaugruppe (SLMC) von Drahtlos-Kommunikationssystemen,
- wobei die Teilnehmerbaugruppe (SLMC) teilnehmerseitig mit zumindest einer Basisstation (BS) zum drahtlosen Anschluß mindestens eines Kommunikationsendgerätes (KE) und vermittlungsseitig mit einer zentralen Kommunikationsanlage (KA) zur Herstellung des Zugangs zu einem Kommunikationsnetz verbunden ist,
mit Mitteln zur Zuordnung von Prioritäten zu Programmodulen, durch die
- den Programmodulen zur Steuerung der schaltungstechnischen Komponenten (PMK) der Teilnehmerbaugruppe (SMLC) und den Programmodulen zur Steuerung der physikalischen Kommunikationsverbindungen (PMP) der Teilnehmerbaugruppe (SLM) mit der zentralen Vermittlungssteuerung (CB) und mit der zumindest einen Basisstation (BS) die höchste Priorität (P1) zugeordnet wird,
- den Programmodulen zur Signalisierungserzeugung von Ton- und Rufsignalen (PMS), den Programmodulen zur Bearbeitung eines Funkbereichwechsel-Vorgangs (PMH) eines an eine Basisstation (BS) drahtlos angeschlossenen Kommunikationsendgerätes (KE), den Programmodulen zur Sicherung der Kommunikation (PMAS) mit den Kommunikationsendgeräten (KE) und mit der Kommunikationsanlage (KA) die zweithöchste Priorität (P2) zugeordnet wird,
- den Programmodulen zur Bearbeitung der Kommunikationsprotokolle (PMB) mit den Basisstationen (BS) und den Kommunikationsendgeräten (KE), den Programmodulen zur Anreizerkennung und -zuordnung (PMAZ) der von den Kommunikationsendgeräten (KE) übermittelten Anreize und den Programmodulen zur Vermittlung (PMV) die dritthöchste Priorität (P3) zugeordnet wird,
- dem Arbitrierungsprogrammodul (AR) zum Auslesen gesicherter und zugeordneter Anreize und zum Aufrufen des durch einen aufgefunden Anreizes bezeichneten Programmoduls die vierthöchste Priorität (P4) zugeordnet wird und
- den Programmodulen mit Verwaltungs- und Testaufgaben (PMT) die niedrigste Priorität (P5) zugeordnet wird,
sowie Mitteln, die die Programmodule entsprechend ihrer Priorität abarbeiten.

9. Anordnung nach Anspruch 8,
**dadurch gekennzeichnet,**
daß die Mittel zur Zuordnung von Prioritäten zu Programmodulen derart ausgebildet sind, daß bei der Prioritätszuordnung
- die Priorität (P2a) der Programmodule zur Signalisierungserzeugung von Ton- und Rufsignalen (PMS)
höher ist als
- die Priorität (P2b) der Programmodule zur Bearbeitung eines Funkbereichwechsel-Vorgangs (PMH) eines an eine Basisstation (BS) drahtlos angeschlossenen Kommunikationsendgerätes (KE) und der Programmodule zur Sicherung (PMAS) der Kommunikation mit den Kommunikationsendgeräten (KE) und mit der Kommunikationsanlage (KA).

10. Anordnung nach einem der Ansprüche 8 oder 9,
**dadurch gekennzeichnet,**
daß die Mittel zur prioritätsgemäßen Abarbeitung der Programmodule derart ausgebildet sind, daß für die Abarbeitung der Anreize und Programmodule durch das Programmsystem jedes Kommunikationsendgerätes (KE) ein gleicher Anteil an den System-Ressourcen zur Verfügung gestellt wird.

11. Anordnung nach einem der Ansprüche 8 bis 10,
**dadurch gekennzeichnet,**
daß Mittel zur Behandlung von Überlastsituationen vorgesehen und derart ausgestaltet sind, daß ein Kommunikationsendgerät (KE), das eine Systemüberbelastung hervorruft, anhand der nachgefragten System-Ressourcen Programmodule durch das Programmsystem detektiert und durch zumindest zeitweiliges und teilweises Vorenthalten von System-Ressourcen gesondert behandelt werden kann.
